# EUROPÄISCHE PATENTSCHRIFT

(11) **EP 3 957 536 B1**
(45) Veröffentlichungstag und Bekanntmachung des Hinweises auf die Patenterteilung: **07.05.2025**
(21) Anmeldenummer: 20192261.4
(22) Anmeldetag: 21.08.2020
(51) Int. Cl.: B61D 17/04, B61D 17/18

(54) **WAGENKASTEN FÜR EIN TRANSPORTFAHRZEUG SOWIE TRANSPORTFAHRZEUG UND HERSTELLUNGSVERFAHREN**
TRANSPORT VEHICLE AND CAR BODY FOR A TRANSPORT VEHICLE AND MANUFACTURING METHOD
CAISSE POUR UN VÉHICULE DE TRANSPORT AINSI QUE VÉHICULE DE TRANSPORT ET PROCÉDÉ DE FABRICATION

(43) Veröffentlichungstag der Anmeldung: 23.02.2022
(73) Patentinhaber: Schweizerische Bundesbahnen SBB, 3000 Bern (CH)
(72) Erfinder: Nyitray, Tomas, 5000 Aarau (CH); Zumbrunn, Georg, 4460 Gelterkinden (CH); Baur, Philip, 8048 Zürich (CH); Juntke, Mike, 09669 Frankenberg (DE); Träger, Christoph, 01139 Dresden (DE); Ludewig, Volker, 09114 Chemnitz (DE); Wolf, Sebastian, 09127 Chemnitz (DE); Schlüssler, Heiko, 08107 Kirchberg (DE)
(74) Vertreter: Rutz & Partner

(56) Entgegenhaltungen:
- WO-A1-00/10859
- CH-A- 367 848
- FR-A- 1 289 484
- FR-A1- 2 613 995
- US-A- 2 997 752
- METZ S: "HOCHTECHNOLOGIE FUR KUHLFAHRZEUG-WAGENKASTEN DURCH SANDWICHBAUWEISE", ZE VRAIL - GLASERS ANNALEN: ZEITSCHRIFT FUER DAS GESAMTE SYSTEM BAHN, GEORG SIEMENS VERLAG GMBH & CO. KG, DE, vol. 113, no. 6/07, 1 June 1989 (1989-06-01), pages 215 - 221, XP000094471, ISSN: 0941-0589

## Beschreibung

Die Erfindung betrifft einen Wagenkasten für den Transport von Waren oder Personen für ein Transportfahrzeug sowie ein Transportfahrzeug, insbesondere ein Schienenfahrzeug, und ein Verfahren zur Herstellung des Transportfahrzeugs mit diesem Wagenkasten.

Als Wagenkasten wird der Aufbau eines Eisenbahnwagens, eines Triebwagens oder einer Lokomotive bezeichnet, der auf einem Untergestell aufgebaut ist.

Die EP2619064A1 offenbart ein Verfahren zur Herstellung eines Wagenkastens für Schienenfahrzeuge, der einen Boden und Seitenwände aufweist, die sich an gegenüberliegenden Seiten des Bodens nach oben erstrecken und die zusammen mit dem Boden sowie einer Abdeckung einen Innenraum des Wagenkastens für den Transport von Personen und/oder Waren begrenzen. Jeweils in einem Übergangsbereich zwischen dem Boden und den Seitenwänden ist ein Längsträger zur Übertragung von Längskräften vorgesehen, der sich in Längsrichtung des Wagenkastens erstreckt.

Die DE20214293U1 offenbart einen Schiebewandwagen mit einem Laderaum zum Transport temperaturempfindlicher Güter auf dem Eisenbahnnetz. Darin ist ausgeführt, dass bei gebräuchlichen Schiebewandwagen rund um den Laderaum Isolierungen vorgesehen sind, die im Wesentlichen aus Isolierschaumblöcken bestehen, die in die zwischen den Wandungen umschlossenen Hohlräume eingebracht und eingeklebt werden. Dabei habe sich jedoch gezeigt, dass sich die einzelnen Isolierschaumblöcke bei Bewegungen bzw. Stössen während des Transports voneinander lösen bzw. gegeneinander verschieben können, so dass die Isolierungen beeinträchtigt werden und Wärmebrücken entstehen.

In der DE20214293U1 wird die Realisierung eines Wagenkastens vorgeschlagen, dessen Laderaum allseits von wärmeisolierten Wandungen umgeben ist, die in Sandwichbauweise ausgeschäumt sind. Durch diese Massnahme kann der Isolierschaum mit den Innenflächen der Wandungen eine so innige Verbindung eingehen, dass diese auch bei heftigeren Stössen und Verwindungen fest an den Innenflächen haften bleibt und auf diese Weise keine Lücken in der Wärmeisolierung entstehen. Die einzelnen Wandungen werden als in sich geschlossene Module bereitgestellt, die Umrandungen zum Halten des eingebrachten Schaumes erfordern. Ferner ist eine tragende Struktur erforderlich, in die die wärmeisolierten Wandungen eingefügt werden können.

Die CH367848A offenbart ein Verfahren zum Zusammenbau von vorgefertigten Elementen, die für den Bau eines Wagenkastens eines Eisenbahnwagens verwendet werden.

Die FR2613995A1 offenbart einen Wagenkasten für ein Schienenfahrzeug, der eine obere Halbschale und eine untere Halbschale umfasst, die aus Verbundmaterial hergestellt sind. Der vorliegenden Erfindung liegt daher die Aufgabe zugrunde, einen verbesserten Wagenkasten für ein Transportfahrzeug sowie ein Transportfahrzeug, insbesondere ein Schienenfahrzeug, mit diesem Wagenkasten zu schaffen. Weiterhin ist ein Verfahren zur Herstellung des mit diesem Wagenkasten versehene Transportfahrzeugs anzugeben.

Der Wagenkasten soll mit reduziertem Aufwand herstellbar sein und einen reduzierten Kostenaufwand verursachen. Zugleich soll der Wagenkasten verbesserte Isolationseigenschaften aufweisen.

Auch das mit dem Wagenkasten versehene Transportfahrzeug soll mit reduziertem Aufwand kostengünstig realisierbar sein. Die Fertigung des Transportfahrzeugs soll vereinfacht werden und weniger kostenintensive manuelle Arbeit erfordern. Weiterhin soll die Struktur des Transportfahrzeugs vereinfacht werden, sodass sich auch diesbezüglich der Fertigungsaufwand reduziert.

Der Wagenkasten soll einen Innenraum mit wenigstens einer Zugangsöffnung aufweisen, die mittels wenigstens einer Schiebetür vorteilhaft abschliessbar ist.

Die Lösung dieser Aufgabe gelingt mit einem Wagenkasten nach Anspruch 1, einem Transportfahrzeug nach Anspruch 10 und einem Herstellungsverfahren nach Anspruch 11.

Der für ein Transportfahrzeug vorgesehene Wagenkasten umfasst wenigstens eine abschliessbare Zugangsöffnung und Kastenmodule, die den Innenraum des Wagenkastens begrenzen und die je eine Aussenplatte und je eine Innenplatte sowie dazwischen eingefügtes Isolationsmaterial aufweisen. Erfindungsgemäss ist vorgesehen, dass die miteinander verbundenen Aussenplatten eine in sich geschlossene Aussenhülle, dass die miteinander verbundenen Innenplatten eine in sich geschlossene Innenhülle und dass das dazwischen eingeschlossene Isolationsmaterial eine in sich geschlossene Isolationshülle bilden.

Die erfindungsgemässe Ausgestaltung der Kastenstruktur hat zahlreiche Vorteile. Durch die Realisierung einer in sich geschlossenen Aussenhülle, einer in sich geschlossenen Innenhülle und einer dazwischen eingefügten in sich geschlossenen Isolationshülle wird eine optimale Isolation erzielt. Wärmebrücken können vollständig vermieden werden.

Die einzelnen Kastenmodule können in einfacher Weise kostengünstig hergestellt und mit geringem Aufwand miteinander verbunden werden, um den Wagenkasten zu realisieren. Dabei können die Kastenmodule kostengünstig seriell gefertigt und baukastenmässig aneinandergefügt und durch Verbindung einerseits der Aussenplatten und andererseits der Innenplatten einfach miteinander verbunden werden. Die Arbeiten sind einfach ausführbar, da sie stets nur an der Innenseite oder der Aussenseite des Wagenkastens und nicht übergreifend zwischen der Innenseite und der Aussenseite des Wagenkastens auszuführen sind. Da die Kastenmodule weitgehend automatisiert in entsprechenden Produktionsstätten gefertigt und anschliessend nur noch mit relativ geringem Aufwand zusammengefügt und miteinander verbunden werden, kann der Anteil kostenintensiver Arbeit deutlich reduziert werden.

Die Kastenmodule können mit hoher Festigkeit produziert werden. Die Aussenplatten und/oder die Innenplatten bestehen vorzugsweise aus Metallblech, Aluminiumblech, vorzugsweise EN AW-5083 H321, rostfreiem Stahlblech oder glasfaserverstärktem Kunststoff. Das Isolationsmaterial besteht vorzugsweise aus Polyurethan, Polyurethan-Schaum, oder aus einem Material, wie Divinycell H60 der Diab Group, 252 21 Helsingborg, Schweden oder Xenergy HD300 Plus von Dow Chemical oder vergleichbaren Produkten.

Die Materialdicke der Aussenhülle bzw. der Aussenplatten liegt vorzugsweise in einem Bereich von 2.5 mm - 6 mm, vorzugsweise bei 4 mm +/- 10 %.

Die Materialdicke der Innenhülle bzw. der Innenplatten liegt vorzugsweise in einem Bereich von 1.25 mm - 5 mm, vorzugsweise bei 2.5 mm +/- 10 %. Die genannten Materialdicken der Aussenplatten und Innenplatten können beliebig kombiniert werden, wobei die Materialdicke der Aussenplatten in der Regel grösser ist.

Die Materialdicke der Isolationshülle liegt vorzugsweise in einem Bereich von 50 mm - 250 mm. Die Materialdicke im Bereich des Bodenelements liegt vorzugsweise bei 75 mm +/- 20 %. Die Materialdicken für die weiteren Kastenmodule und die Schiebetür liegen vorzugsweise in einem Bereich von 65 mm - 180 mm.

Das Isolationsmaterial der Bodenmodul ist vorzugsweise Divinycell H60, H80, H130 der Diab Group, 252 21 Helsingborg, Schweden. Das für die weiteren Kastenmodule und die Schiebetür verwendete Isolationsmaterial ist vorzugsweise vom Typ Xenergy (RAVAGO XENERGY HD300-GV-Plus) von Dow Chemical.

Die Materialdicke der Isolationshülle ist vorzugsweise um einen Faktor im Bereich von 25 - 60 höher als die Materialdicke der Aussenplatten oder der Innenplatten.

Die Aussenplatten und die Innenplatten sowie das dazwischen eingeschlossene Isolationsmaterial jedes Kastenmoduls werden fest miteinander verbunden, sodass Kastenmodule mit hoher Stabilität resultieren. Die Kastenmodule werden erfindungsgemäß derart dimensioniert, dass der Wagenkasten nach Zusammenbau der Kastenmodule eine selbsttragende Struktur aufweist. Der erfindungsgemässe Wagenkasten kann somit auf einem Untergestell des Transportfahrzeugs, das beispielsweise auf wenigstens einem Laufwerk ruhende Längsträger aufweist, aufgebaut werden, ohne dass zusätzliche tragende Strukturelemente erforderlich sind. Auch hinsichtlich der Fertigung des Transportfahrzeugs, gegebenenfalls eines Schienenfahrzeugs, wie eines Güterwagens oder eines Personenwagens, ergibt sich eine deutliche Reduktion des Herstellungsaufwand und des Kostenaufwands.

Erfindungsgemäß ist vorgesehen, dass die Kastenmodule wenigstens ein Bodenmodul, wenigstens zwei Wandmodule, die gegebenenfalls über Verbindungsmodule beidseits an das Bodenmodul anschliessen, und wenigstens ein Deckenmodul umfassen, welches gegebenenfalls über Verbindungsmodule an die Wandmodule anschliesst.

Das wenigstens eine Bodenmodul, die beiden Wandmodule, die gegebenenfalls vorhandenen Verbindungsmodule, und das wenigstens eine Deckenmodul sind vorzugsweise an den Stirnseiten des Wagenkastens je mit einem Frontmodul verbunden, welches ebenfalls eine Aussenplatte und eine Innenplatte sowie dazwischen angeordnetes Isolationsmaterial aufweist.

Die für die Frontmodule verwendeten Materialien und Materialdicken entsprechen vorzugsweise den Materialien und Materialdicken der weiteren Kastenmodule.

Nach Montage der Frontmodule resultieren somit eine ganzseitig in sich geschlossene Aussenhülle, eine ganzseitig in sich geschlossene Innenhülle und dazwischen eine ganzseitig in sich geschlossene Isolationshülle. Die resultierende Aussenhülle, Innenhülle und Isolationshülle sind dabei nur durch die wenigstens eine Zugangsöffnung und gegebenenfalls durch Fensteröffnungen durchbrochen, weshalb eine optimale Isolation und eine optimale Stabilität des Wagenkastens gegeben sind.

Die wenigstens eine Zugangsöffnung ist vorzugsweise von einem Türrahmen umschlossen und durch eine Schiebetür abschliessbar, die entlang von Führungsschienen geführt und in den Türrahmen dicht abschliessend einsenkbar ist. Die Schiebetür umfasst eine Aussenplatte und eine Innenplatte, zwischen denen Isolationsmaterial vorgesehen ist. Die für die Schiebetür bzw. die Aussenplatte, Innenplatte und das Isolationsmaterial verwendeten Materialien und Materialdicken entsprechen vorzugsweise den Materialien und Materialdicken der Kastenmodule.

Das Isolationsmaterial vorzugsweise aller Kastenmodule und/oder der Schiebetür ist vorzugsweise als Kunststoffschaum oder einstückig oder mehrstückig als feste Isolationselemente zwischen die Aussenplatten und die Innenplatten eingefügt.

Vorzugsweise werden die Isolationselemente mit den Aussenplatten und den Innenplatten verklebt.

Die Isolationselemente sind vorzugsweise derart zugeschnitten, dass die Isolationshülle beim Zusammenfügen der Kastenmodule praktisch spaltenfrei resultiert.

Vorzugsweise werden komprimierbare Isolationselemente vorgesehen, welche derart deformierbar sind, dass leicht überdimensionierte Isolationselemente nach der Komprimierung dicht aneinander anschliessen. Die Isolationselemente können beispielsweise um 1% - 2 % überdimensioniert sein.

Der Wagenkasten kann an der Innenseite oder Aussenseite mit beliebigen Armaturen und Apparaten ausgerüstet werden. Ferner sind Trennwände vorzugsweise an beliebigen Positionen im Innenraum des Wagenkastens verankerbar. Dazu sind vorzugsweise Halteschienen im Kastenmodul integriert.

Das Transportfahrzeug kann in einfacher Weise aufgebaut werden und weist vorzugsweise ein konventionelles Untergestell mit wenigstens einem Laufwerk auf. Eisenbahnwagen weisen vorzugsweise zwei Drehgestelle als Laufwerke auf, die durch das Untergestell, welches vorzugsweise wenigstens zwei durchlaufende Tragprofile aufweist, miteinander verbunden sind. Das Bodenmodul kann daher auf das Untergestell aufgesetzt und damit verbunden werden. Dazu ist das Bodenmodul vorzugsweise mit einem oder mehreren Anschlussprofilen versehen, die sich vorzugsweise über die gesamte Länge des Bodenmoduls erstrecken.

Der Zusammenbau des Wagenkastens und die Verbindung des Bodenmoduls mit dem Untergestell können in beliebigen Schritten erfolgen. Der Aufbau des Wagenkastens kann sequenziell auf dem Untergestell beginnend mit dem Bodenmodul erfolgen. Alternativ kann der Wagenkasten teilweise oder vollständig zusammengebaut und erst dann auf das Untergestell aufgesetzt werden.

Dazu werden die wenigstens eine Schiebetür und die Kastenmodule für den vorzugsweise selbsttragenden Wagenkasten bereitgestellt, umfassend wenigstens ein Bodenmodul, wenigstens zwei Wandmodule, gegebenenfalls Verbindungsmodule, wenigstens ein Deckenmodul und zwei Frontmodule, die je eine Aussenplatte und eine Innenplatte aufweisen, die mit dazwischen angeordnetem Isolationsmaterial verbunden, vorzugsweise verklebt werden.

Anschliessend werden in der frei gewählten Reihenfolge die Aussenplatten und die Innenplatten der Kastenmodule je miteinander verbunden, um die Aussenhülle und die Innenhülle zu bilden, zwischen denen die in sich geschlossene Isolationshülle resultiert.

Vorzugsweise sind die Aussenplatten und die Innenplatten je beidseitig und gegebenenfalls frontseitig mit Anschlussflanschen versehen, sodass die einander zugeordneten Anschlussflansche der Aussenplatten und die einander zugeordneten Anschlussflansche der Innenplatten in einfacher Weise je miteinander verbunden, gegebenenfalls verklebt vernietet und verschweisst werden können. Vorzugsweise werden thermisch neutrale Verbindungsverfahren angewendet. Besonders vorteilhaft können die Anschlussflanschen mit Magna-Lok **^{®}-**Nieten miteinander verbunden werden. Dazu werden die Anschlussflanschen bereits bei der Fertigung der Kastenmodule oder nach dem Zusammenbau der Kastenmodule mit konzentrischen Öffnungen versehen, in die die Magna-Lok ^{®}-Nieten eingesetzt und festgezogen werden, sodass die Öffnungen verschlossen werden und stabile Verbindungen zwischen den Anschlussflanschen resultieren.

Die Anschlussflanschen werden vorzugsweise derart vorgesehen und angeordnet, dass der untere Anschlussflansch der Aussenplatte eines oberen Kastenmoduls jeweils den oberen Anschlussflansch der Aussenplatte eines unteren Kastenmoduls überragt. Regenwasser kann daher nie in die Verbindungsstellen zwischen den Anschlussflanschen eindringen, sondern wird über den äusseren Anschlussflansch stets an der Verbindungsstelle vorbeigeführt.

Im Wagenkasten vorgesehene Zugangsöffnungen werden vorzugsweise mit einem Türrahmen versehen, in den eine Schiebetür dicht abschliessend eingesenkt werden kann. Die Schiebetür ist vorzugsweise mittels Laufwerken entlang von Führungsschienen verschiebbar und mit den Laufwerken durch wenigstens einen Drehmechanismus verbunden, mittels dessen die Schiebetür in den Türrahmen einsenkbar ist.

Nachfolgend wird die Erfindung anhand von Zeichnungen näher erläutert. Dabei zeigt:
- Fig. 1: ein teilweise gezeigtes Transportfahrzeug bzw. einen Eisenbahnwagen 1 mit einem Wagenkasten 10, der miteinander verbundene Kastenmodule 11, 12, 13, 14, 15, nämlich ein Bodenmodul 11, zwei Wandmodule 12, zwei Verbindungsmodule 13, zwei Deckenmodule 14, sowie zwei Frontmodule 15 und wenigstens eine Schiebetür 16 (siehe Fig. 7) umfasst, die je eine Aussenplatte 111, 121, 131, 141, 151 und je eine Innenplatte 113, 123, 133, 143, 153 aufweisen, zwischen denen Isolationsmaterial bzw. ein einteiliges oder mehrteiliges Isolationsmodul 112, 122, 132, 142, 152 gehalten ist (siehe Fig. 4a);
- Fig. 2a: ein Segment des Wagenkastens 10 von Fig. 1, der eine Aussenhülle 101 und eine Innenhülle 103 aufweist, zwischen denen eine Isolationshülle 102 bestehend aus Isolationsmaterial 112, 122, 132, 142, 152 gehalten ist;
- Fig. 2b: den Querschnitt durch den Wagenkasten 10 von Fig. 2a nach Entnahme der Isolationshülle 102 und Freilegung des Isolationsraumes 1020, der zur Aufnahme der Isolationshülle 102 vorgesehen ist;
- Fig. 3a: in räumlicher Darstellung den Querschnitt durch den Wagenkasten 10 von Fig. 2a nach Entnahme der Isolationshülle 102 mit der Aussenhülle 101 und der Innenhülle 103;
- Fig. 3b: eine erste Verbindungsstelle zwischen Innenplatten 133, 143 der Innenhülle 103;
- Fig. 3c: eine zweite Verbindungsstelle zwischen Innenplatten 123, 133 der Innenhülle 103 und eine dritte Verbindungsstelle zwischen Aussenplatten 121, 131 der Aussenhülle 101;
- Fig. 3d: eine vierte Verbindungsstelle zwischen Innenplatten 113, 123 der Innenhülle 103 und eine fünfte Verbindungsstelle zwischen Aussenplatten 111, 121 der Aussenhülle 101;
- Fig. 3e: die Isolationshülle 102 von Fig. 2a bestehend aus mehreren passend zugeschnittenen Isolationselementen 102x, 102y;
- Fig. 4a: das Segment des Wagenkastens 10 von Fig. 2a in räumlicher Explosionsdarstellung mit Kastenmodulen 11, 12, 13, 14, nämlich einem Bodenmodul 11, zwei Wandmodulen 12, zwei Verbindungsmodulen 13 und zwei Deckenmodulen 14, die bereitgestellt und durch Verbindung der Elemente der Aussenhülle 101 und der Elemente der Innenhülle 103 miteinander verbunden werden;
- Fig. 4b: Teile der beiden Wandmodule 12, die beiden Verbindungsmodule 13 und die beiden Deckenmodule 14 des Wagenkastens 10 von Fig. 4a;
- Fig. 4c: eines der Deckenmodule 14 von Fig. 4b in Explosionsdarstellung;
- Fig. 4d: eines der Verbindungsmodule 13 von Fig. 4b in Explosionsdarstellung;
- Fig. 4e: das Bodenmodul 11 von Fig. 4a;
- Fig. 4f: das Bodenmodul 11 von Fig. 4a in Explosionsdarstellung;
- Fig. 4g: eines der Wandmodule 12 von Fig. 4a mit Blick auf die Aussenplatte 121;
- Fig. 4h: das Wandmodul 12 von Fig. 4g in Explosionsdarstellung;
- Fig. 4i: das Wandmodul 12 von Fig. 4g mit Blick auf die Innenplatte 121;
- Fig. 4j: das Wandmodul 12 von Fig. 4f in Explosionsdarstellung;
- Fig. 5a: einander zugewandte Teile des Bodenmoduls 11 und des Wandmoduls 12;
- Fig. 5b: die miteinander verbundenen Teile des Bodenmoduls 11 und des Wandmoduls 12 von Fig. 5a;
- Fig. 6: einen Teil des Wagenkastens 10 von Fig. 1 mit losgelöstem Frontmodul 15, welches eine Aussenplatte 151 und eine Innenplatte 153 sowie dazwischen gehaltenes Isolationsmaterial 152 aufweist;
- Fig. 7a: eine teilweise aufgeschnittene Schiebetür 16, die von unteren und oberen Laufwerken 94, 95 verschiebbar entlang Führungsschienen 98, 99 gehalten ist, mit einem Drehmechanismus 5, 52, mittels dessen die Schiebetür 16 in den Türrahmen 96 der Zugangsöffnung 90 einsenkbar ist; und
- Fig. 7b: einen Teil einer Kurbelwelle 52 des Drehmechanismus 5 von Fig. 7a, der über einen Gelenkhebel 53 mit dem oberen Laufwerk 95 verbunden ist.

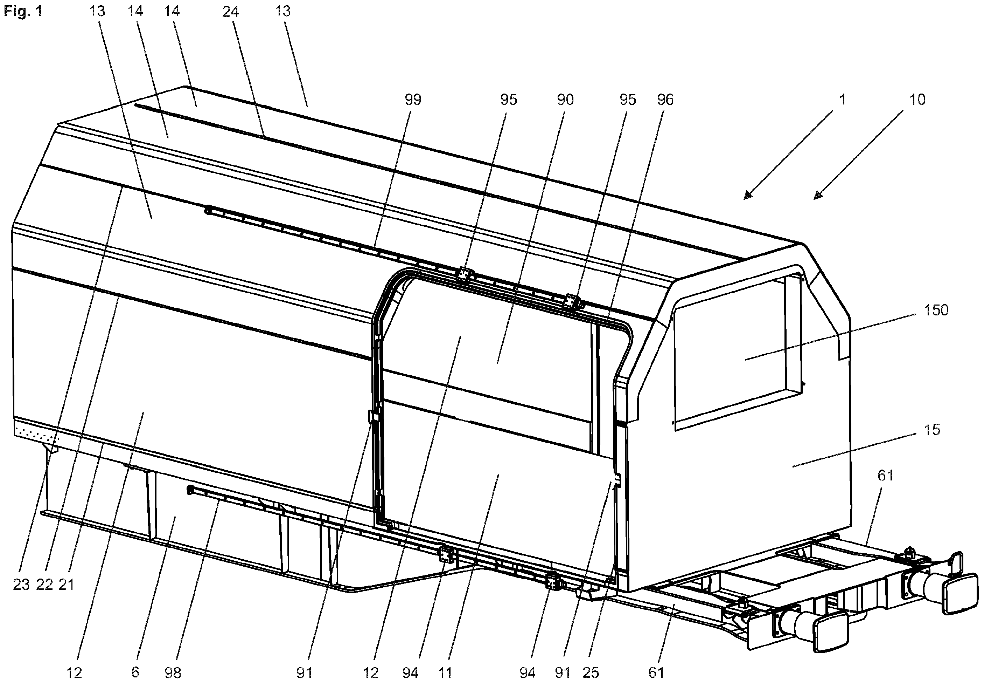

Fig. 1 zeigt die vordere Hälfte eines Eisenbahnwagens 1 mit einem Untergestell 6, auf das ein erfindungsgemässer Wagenkasten 10 aufgesetzt ist. Das Untergestell 6 umfasst zwei Längsträger 61 und ist frontseitig und rückseitig mit einem Laufwerk oder Drehgestell versehen (nicht gezeigt). Die hintere Hälfte des Eisenbahnwagens 1, die weggeschnitten wurde, ist vorzugsweise gleich aufgebaut, wie die vordere Hälfte.

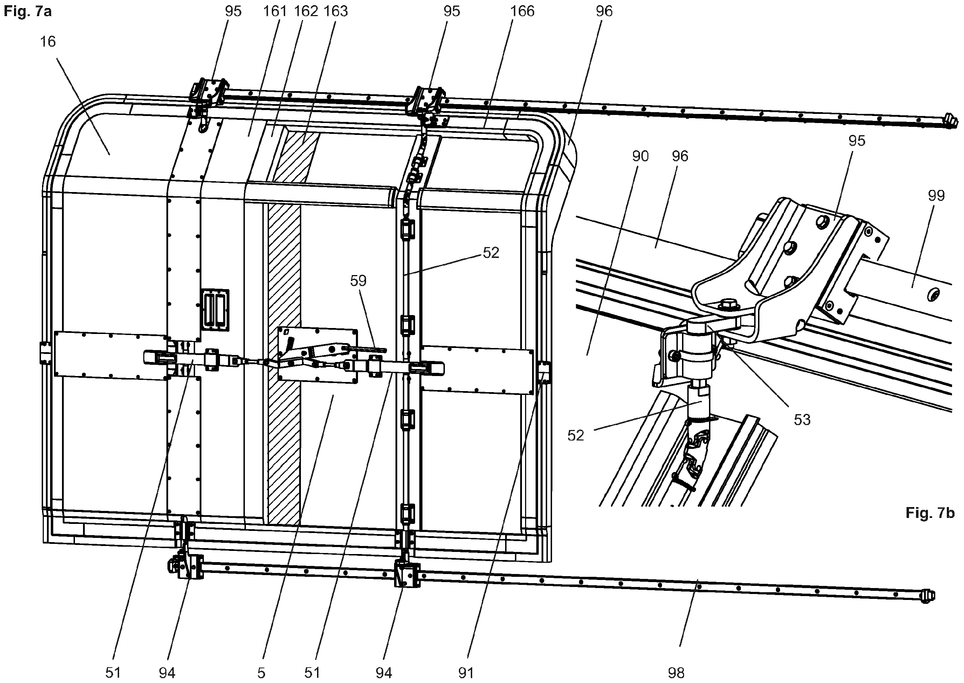

An den einander gegenüberliegenden Seitenwänden des Eisenbahnwagens 1 sind Zugangsöffnungen 90 vorgesehen, die von einem Türrahmen 96 umschlossen und vorzugsweise je mittels einer Schiebetür 16 gemäss Fig. 7 abschliessbar sind. Die Schiebetür 16 ist von unteren Laufwerken 94, die entlang einer unteren Führungsschiene 98 verschiebbar sind, und oberen Laufwerken 95, die entlang einer oberen Führungsschiene 99 verschiebbar sind, verschiebbar gehalten. Die Schiebetür 16 ist entlang den gerade verlaufenden Führungsschienen 98, 99 vor die betreffende Zugangsöffnung 90 verschiebbar und mittels eines Drehmechanismus 5, 52 in den Türrahmen 96 einsenkbar. Mittels eines Verschlussmechanismus, der Verschlussstangen 51 aufweist, ist die Schiebetür 16 verriegelbar. Die Verschlussstangen 51 sind in Verschlussteile 91 einführbar, die im Türrahmen 96 vorgesehen sind (siehe Fig. 7). Der Verschlussmechanismus ist in dieser Ausgestaltung in den Drehmechanismus 5 integriert.

Der Wagenkasten 10 ist modular aufgebaut und umfasst mehrere Kastenmodule 11, 12, 13, 14, 15. In der gezeigten Ausgestaltung ist ein einteiliges oder mehrteiliges Bodenmodul 11 vorgesehen, an das beidseitig vertikal ausgerichtete Wandmodule 12 anschliessen, die über geneigt verlaufende Verbindungsmodule 13 mit horizontal ausgerichteten Deckenmodulen 14 verbunden sind. Auf jeder Seite des Wagenkastens 10 ist daher ein Aufbau mit einem Wandmodul 12, einem Verbindungsmodul 13 und einem Deckenmodul 14 vorgesehen. Auf beiden Stirnseiten ist der Wagenkasten 10 durch ein Frontmodul 15 abgeschlossen. Die Verbindungslinien 21, 22, 23, 24, 25 zwischen den genannten Kastenmodulen 11, 12, 13, 14, 15 sind in Fig. 1 eingezeichnet.

Der Querschnitt des Wagenkastens 10 sowie die Anzahl und Aufteilung der Kastenmodule ist frei wählbar und wird dem Design des Transportfahrzeugs 1 entsprechend angepasst.

Die Kastenmodule 11, 12, 13, 14, 15 können in Serienfertigung mit geringem Arbeitsaufwand und Kostenaufwand separat gefertigt werden. Beispielsweise sind fünf Produktionsstrasse vorgesehen, in denen je eines der Kastenmodule 11, 12, 13, 14, 15 gefertigt wird. Aufwändige manuelle Fertigung in einer Montagehalle wird daher durch kostengünstige automatisierte Fertigung in einer Produktionshalle ersetzt. Die Kosten für die Fertigung eines Wagenkastens 10 oder Transportwagens 1 können daher wesentlich gesenkt werden. Dies insbesondere auch deshalb, weil mittels der stabilen Kastenmodule 11, 12, 13, 14, 15 ein selbsttragender Wagenkasten 10 gebaut werden kann. D.h., das Transportfahrzeug 1 benötigt zusätzlich zum Untergestell 6 und zum Wagenkasten 10 keine zusätzlichen tragenden Strukturelemente. Ein hoher Anteil der Fertigungsarbeit des Transportwagens 1 kann daher von einer Fertigungshalle, in der die Transportwagen aufgebaut werden, in eine Produktionsstätte verlegt werden, in der die Kastenmodule 11, 12, 13, 14, 15 in hoher Qualität effizient gefertigt werden können. Die Fertigungsarbeit in der Werkhalle, in der die Transportwagen 1 fertiggestellt werden, beschränkt sich daher auf den Zusammenbau der Kastenmodule 11, 12, 13, 14, 15 und den anschliessenden Einbau der Armaturen.

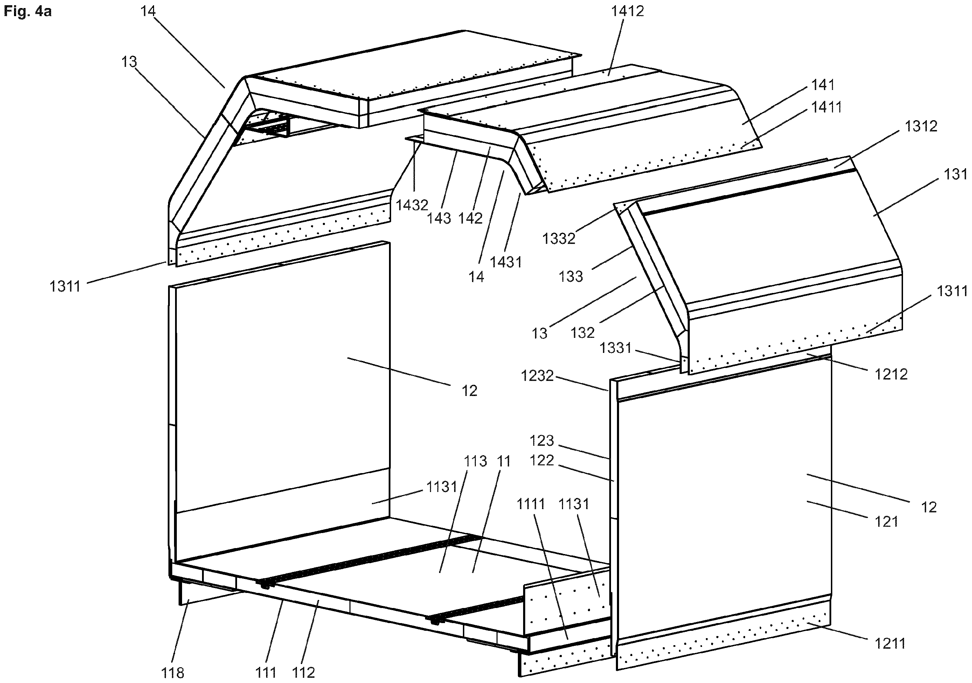

Die Kastenmodule 11, 12, 13, 14, 15 umfassen je eine Aussenplatte 111, 121, 131, 141, 151 und je eine Innenplatte 113, 123, 133, 143, 153, zwischen denen Isolationsmaterial 112, 122, 132, 142, 152 gehalten ist (siehe Fig. 4a). Die Aussenplatten 111, 121, 131, 141, 151 und/oder die Innenplatten 113, 123, 133, 143, 153 bestehen vorzugsweise aus Metallblech, Aluminiumblech, vorzugsweise EN AW-5083 H321, vorzugsweise rostfreiem Stahlblech, oder glasfaserverstärktem Kunststoff. Das Isolationsmaterial bzw. die kleinteiligen oder mehrteiligen Isolationsmodule 112, 122, 132, 142, 152 bestehen vorzugsweise aus Polyurethan, Polyurethan-Schaum, oder aus einem Material, wie Divinycell H60, H80, H130 der Diab Group, 252 21 Helsingborg, Schweden oder Xenergy (RAVAGO XENERGY HD300-GV-Plus) von Dow Chemical oder vergleichbaren Produkten. Die genannten Isolationsmaterialien weisen eine hohe Festigkeit auf und verleihen den Kastenmodulen 11, 12, 13, 14, 15 zusammen mit der Aussenplatte 111, 121, 131, 141, 151 und der Innenplatte 113, 123, 133, 143, 153 eine hohe Festigkeit und Tragfähigkeit.

Das Isolationsmaterial 112, 122, 132, 142, 152, welches in Form zugeschnittener Isolationselemente oder in Form eines aushärtenden Kunststoffschaumes zwischen die Aussenplatten 111, 121, 131, 141, 151 und Innenplatten 113, 123, 133, 143, 153 eingefügt wurde, ist mit diesen fest verbunden, vorzugsweise verklebt. Als Klebstoffe sind beispielsweise Polyurethan-Klebstoffe geeignet, die Bestandteil der Gruppe der Reaktionsklebstoffe und additionsvernetzend sind. Die Polymere bieten ein Eigenschaftsspektrum von niedrig vernetzt (Elastomere mit hoher Bruchdehnung) bis hin zu stark vernetzt (Duromere). Es wird ein Klebstoff mit einer Vernetzung gewählt, welche bei Betrieb des Transportfahrzeugs 1 üblicherweise auftretende Temperaturdehnungen der Metallplatten erlaubt, ohne dass Ablösungen oder Risse auftreten.

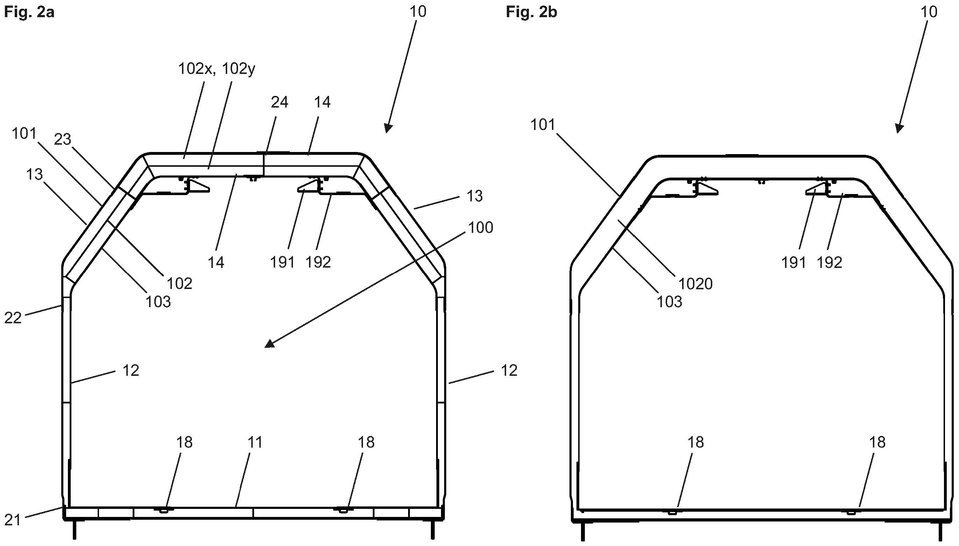

Fig. 2a zeigt ein Segment des Wagenkastens 10 von Fig. 1, der durch Zusammenfügen der Kastenmodule 11, 12, 13, 14, 15 realisiert wurde. Durch Verbindung einerseits der Aussenplatten 111, 121, 131, 141, 151 und andererseits der Innenplatten 113, 123, 133, 143, 153 der Kastenmodule 11, 12, 13, 14, 15 wurden eine in sich geschlossene Aussenhülle 101, eine in sich geschlossene Innenhülle 103 und eine in sich geschlossene Isolationshülle 102 geschaffen. An den Verbindungsstellen 21, 22, 23, 24 sind die Verbindungen der Aussenplatten 111, 121, 131, 141, 151 durch die in sich geschlossene Isolationshülle 102 von den Verbindungen der Innenplatten 113, 123, 133, 143, 153 getrennt, sodass Wärmebrücken vermieden werden.

Es ist illustriert, dass die Isolationshülle 102 in vorzugsweisen Ausgestaltungen aus Isolationselementen 102x, 102y besteht, die derart zugeschnitten sind, dass die Isolationshülle 102 ohne Lücken und Spalten realisiert wird. Durch die vollkommene Trennung der Aussenhülle 101 von der Innenhülle 103 durch die Isolationshülle 102 vorzugsweise über die gesamte Länge des Wagenkastens 10 wird eine optimale Isolation des Innenraumes 100 des Wagenkastens 10 erzielt.

In Fig. 2a ist ferner eingezeichnet, dass beliebige Armaturen, Geräte und Apparate, wie Schienen 18, Ablagen 192, Ventilatoren oder Kühlgeräte 191 vorteilhaft an der Innenhülle 103 befestigt werden können.

Fig. 2b zeigt den Querschnitt durch den Wagenkasten 10 von Fig. 2a nach Entnahme der Isolationshülle 102 und Freilegung des Isolationsraumes 1020, der zur Aufnahme der Isolationshülle 102 vorgesehen ist. Es ist ersichtlich, dass der Isolationsraum 1020 ununterbrochen in sich geschlossen ist und keine Wärmebrücken vorhanden sind.

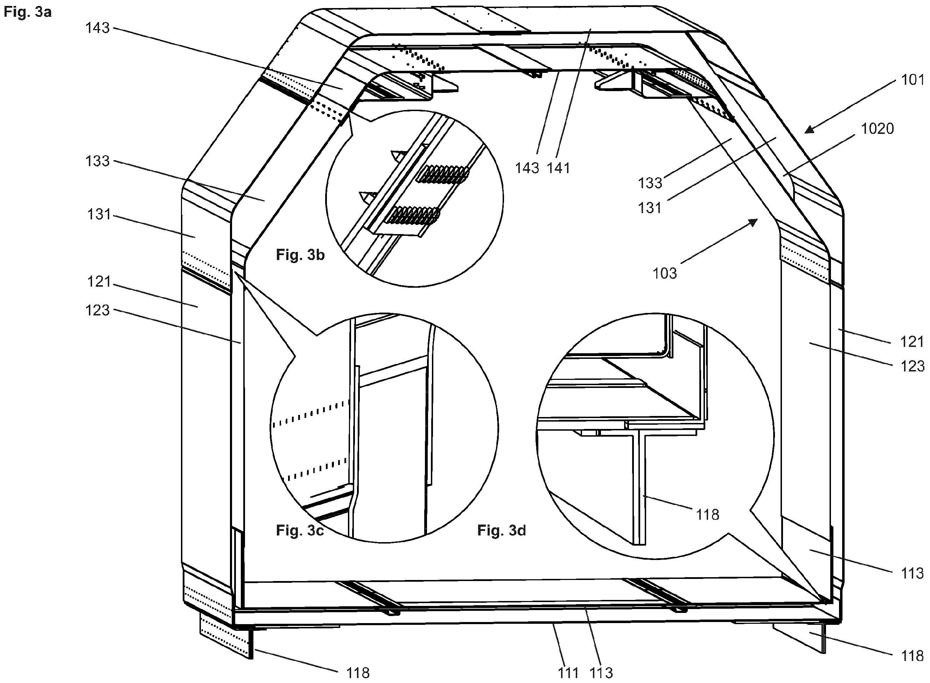

Fig. 3a zeigt in räumlicher Darstellung das Segment des Wagenkastens 10 von Fig. 2a nach Entnahme der Isolationshülle 102 mit der in sich geschlossenen Aussenhülle 101 und der in sich geschlossenen Innenhülle 103. Es ist gezeigt, dass sich einerseits die einander zugewandten Endstücke der Aussenplatten 111, 121, 131, 141, 151 und andererseits die einander zugewandten Endstücke der Innenplatten 113, 123, 133, 143, 153 gegenseitig überlappen und durch mechanische Verbindungsmittel, wie mechanische Fügeverfahren, Durchsetzfügen, Nieten, Stanznieten Toxen, Schweissen und/oder chemische Verbindungsmittel, wie Kunststoffklebstoffe oder Metallklebstoffe, miteinander verbunden sind.

Fig. 3b zeigt eine erste Verbindungsstelle zwischen Innenplatten 133, 143 der Innenhülle 103, die z.B. durch Stanznieten miteinander verbunden sind.

Fig. 3c zeigt eine zweite Verbindungsstelle zwischen Innenplatten 123, 133 der Innenhülle 103 und eine dritte Verbindungsstelle zwischen Aussenplatten 121, 131 der Aussenhülle 101, die durch Stanznieten und/oder Metallklebstoffe miteinander verbunden sind.

Fig. 3d eine vierte Verbindungsstelle zwischen Innenplatten 113, 123 der Innenhülle 103 und eine fünfte Verbindungsstelle zwischen Aussenplatten 111, 121 der Aussenhülle 101 des Bodenelements 11 und einer Seitenwand 12. Gezeigt ist ferner, dass auch an der Aussenwand des Wagenkastens 10 beliebige Montageelemente montierbar sind, wie die in Fig. 1 gezeigten Führungsschienen 98, 99 oder die in Fig. 3d gezeigten Anschlussprofile 118 an der Unterseite des Bodenmoduls 11, die mit dem Untergestell 6 verbindbar sind.

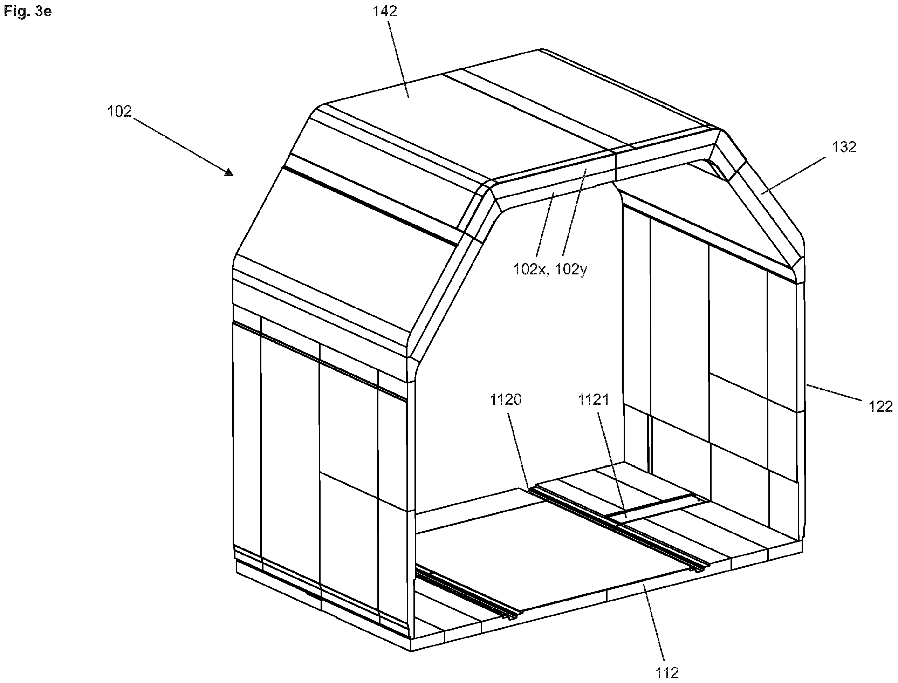

Fig. 3e zeigt die Isolationshülle 102 von Fig. 2a bestehend aus mehreren passend zugeschnittenen Isolationselementen 102x, 102y. In die Isolationshülle 112 sind Ausnehmungen 1120, 1121 eingeformt, die der Aufnahme von Armaturen oder Schienen 18 bzw. entsprechenden Einsenkungen der Innenplatte dienen. Die Isolationselemente 102x, 102y werden derart zugeschnitten und gegebenenfalls miteinander verklebt, dass die Isolationshülle 102 möglichst keine Spalten aufweist und eine SBB 20-03 EP optimale Isolation gewährleistet ist. Das Isolationsmaterial 112, 122, 132, 142 der Kastenmodule 11, 12, 13, 14 ist dabei derart gewählt, dass sich beim Zusammenfügen der Kastenmodule 11, 12, 13, 14 vorzugsweise durch leichte Deformation des vorzugsweise leicht überdimensionierten Isolationsmaterials 112, 122, 132, 142 alle Spalten automatisch schliessen.

Fig. 4a zeigt das Segment des Wagenkastens 10 von Fig. 2a in räumlicher Explosionsdarstellung mit Kastenmodulen 11, 12, 13, 14, nämlich einem Bodenmodul 11, zwei Wandmodulen 12, zwei Verbindungsmodulen 13 und zwei Deckenmodulen 14, die bereitgestellt und einerseits durch Verbindung der einander zugewandten Endstücke der Aussenplatten 111, 121, 131, 141, und andererseits durch Verbindung der einander zugewandten Endstücke der Innenplatten 113, 123, 133, 143, 153 miteinander verbunden werden. Die Aussenplatten 111, 121, 131, 141 sind beidseitig und gegebenenfalls vollzeitig mit Endstücken bzw. Anschlussflanschen 1111, 111F; 1211, 1212; 1311, 1312; 1411, 1412 versehen und die Innenplatten 113, 123, 133, 143, 153 sind beidseitig und gegebenenfalls vollzeitig mit Endstücken bzw. Anschlussflanschen 1131; 1231, 1232; 1331, 1332; 1431, 1432 versehen, die je paarweise miteinander verbunden, gegebenenfalls zusammengefügt, vernietet, verschweisst oder verklebt werden.

Der untere Anschlussflansch 1411 der Aussenplatte 141 des Deckenmoduls 14 überdeckt dabei den oberen Anschlussflansch 1312 der Aussenplatte 131 des darunter liegenden Verbindungsmoduls 13 nach aussen.

Der untere Anschlussflansch 1311 der Aussenplatte 131 des Verbindungsmoduls 13 überdeckt dabei den oberen Anschlussflansch 1212 der Aussenplatte 121 des darunter liegenden Wandmoduls 12 nach aussen.

Der untere Anschlussflansch 1211 der Aussenplatte 121 des Wandmoduls 12 überdeckt dabei den Anschlussflansch 1111 der Aussenplatte 111 des darunter liegenden Bodenmoduls 11 nach aussen.

Die Aussenplatte 141, 131, 121 eines höher liegenden Kastenmoduls 14, 13, 12 überdeckt daher jeweils die Aussenplatte 131, 121, 111 des darunterliegenden Kastenmoduls 13, 12, 11 nach aussen.

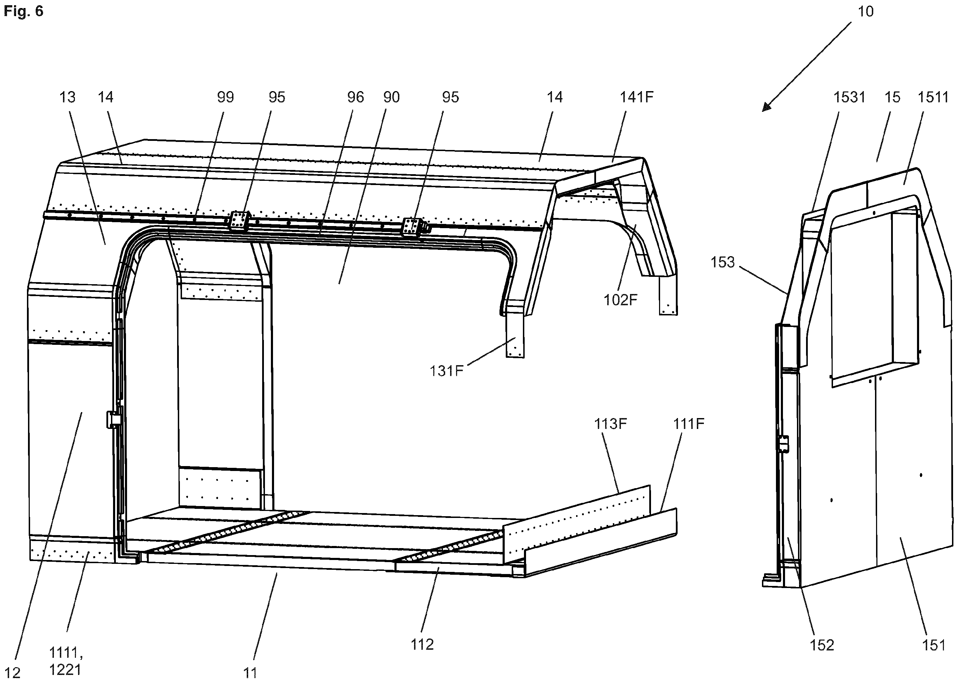

Fig. 6 zeigt, dass der Wagenkasten 10 bzw. die Kastenmodule 11, 12, 13, 14 auch frontseitig Anschlussflanschen 111F, 113F; 131F, 141F aufweisen, die mit Anschlussflanschen 1511, 1531 der Frontmodule 15 in gleicher Weise, mechanisch und/oder chemisch verbindbar sind, um die Aussenhülle 101 und die Innenhülle 103 auch stirnseitig zu schliessen.

Die Anschlussflanschen sind derart ausgebildet, dass sie nach dem Zusammenfügen der Kastenmodule 11, 12, 13, 14, 15 einander paarweise überdecken und durch die beschriebenen Verbindungsverfahren in einfacher Weise miteinander verbunden werden können.

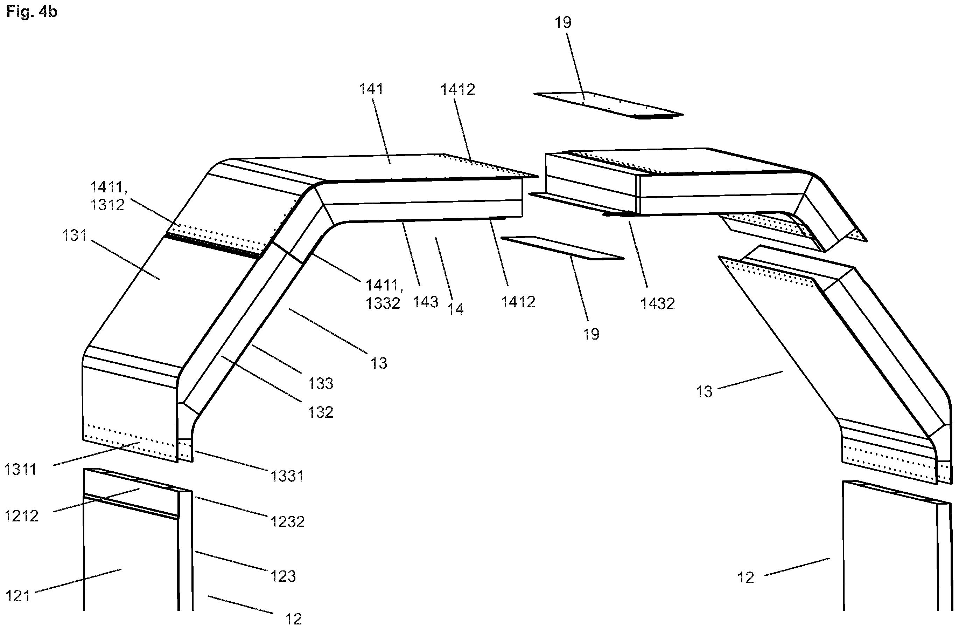

Fig. 4b zeigt Teile der beiden Wandmodule 12, die beiden Verbindungsmodule 13 und die beiden Deckenmodule 14 des Wagenkastens 10 von Fig. 4a. Es ist ersichtlich, dass die unteren Anschlussflanschen 1311, 1331 der Zwischenmodule 13 das Isolationsmaterial oder Isolationsmodul 132 nach unten überragen und so das obere Endstück des zugewandten Wandmoduls 12 übergreifen können. Das Zwischenmodul 13 kann somit auf das Wandmodul 12 aufgesetzt oder aufgesteckt werden, sodass bereits eine stabile mechanische Verbindung resultiert, bevor die Anschlussflanschen oder Endstücke 1311, 1331; 1212, 1232 der Aussenplatten 131, 121 und Innenplatten 133, 123 mechanisch und/oder chemisch miteinander verbunden werden.

Vorzugsweise werden daher die beiden Deckenmodule 14 zuerst miteinander und anschliessend mit den Verbindungsmodulen 13 verbunden, wonach das erweiterte Deckenmodul 13-14-14-13 auf die bereits installierten Wandmodule 12-12 aufgesetzt wird.

Anschliessend werden die Frontmodule 15 stirnseitig mit den bereits installierten Kastenmodulen 11, 12, 13, 14 verbunden. Je nach vorliegenden Gegebenheiten kann auch eine andere Reihenfolge der Verbindung der Kastenmodule 11, 12, 13, 14, 15 sinnvoll sein.

Fig. 4b zeigt ferner, dass in Ergänzung zu den Anschlussflanschen zusätzlich Verbindungsplatten 19 vorgesehen werden können, um die Verbindungen zu erleichtern und/oder zu verstärken.

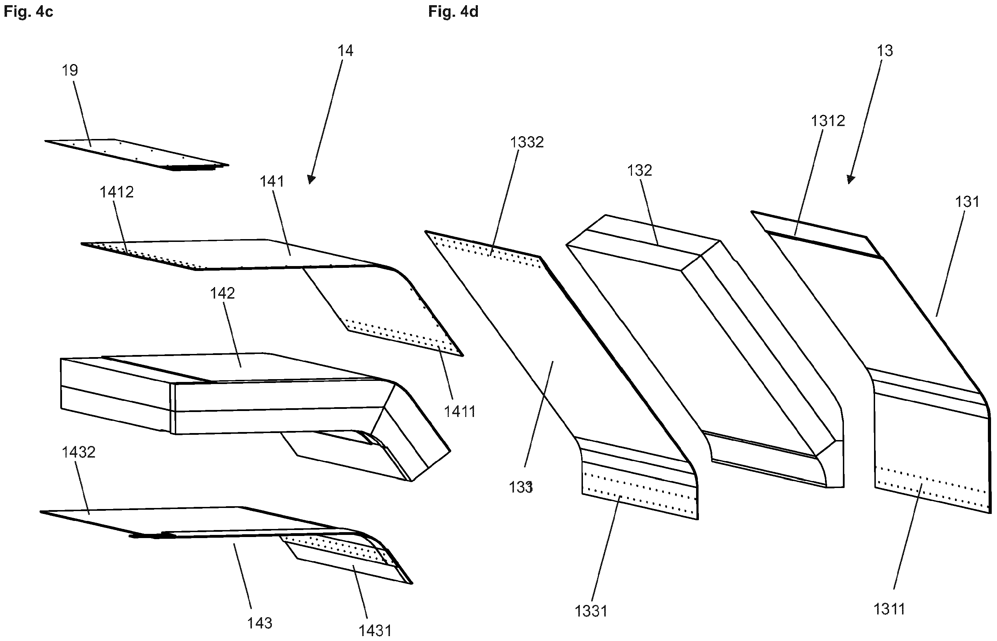

Fig. 4c zeigt eines der Deckenmodule 14 von Fig. 4b in Explosionsdarstellung.

Fig. 4d zeigt eines der Verbindungsmodule 13 von Fig. 4b in Explosionsdarstellung.

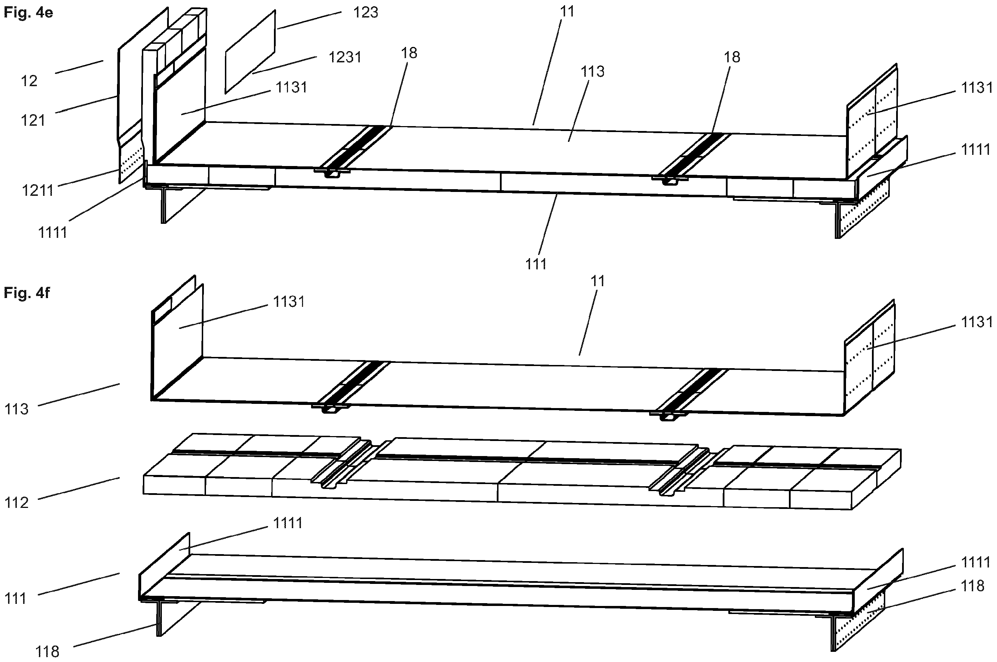

Fig. 4e zeigt das Bodenmodul 11 von Fig. 4a mit einem Endstück des linken Wandmoduls 12. Es ist ersichtlich, wie die Anschlussflanschen 1111, 1211 der Aussenplatten 111, 121 und die Anschlussflanschen 1131, 1231 des Bodenmoduls 11 und des Wandmoduls 12 miteinander verbunden werden können.

Fig. 4f zeigt das Bodenmodul 11 von Fig. 4a in Explosionsdarstellung mit der Aussenplatte 111, die beidseitig nach oben abgewinkelte Anschlussflanschen 1111 aufweist, mit der Innenplatte 113, die beidseitig nach oben abgewinkelte Anschlussflanschen 1131 aufweist und mit dem Isolationsmaterial oder Isolationsmodul 112, welches vorzugsweise bündig zwischen die Anschlussflanschen 1111 der Aussenplatte 111 passt. Ferner sind die Anschlussprofile 118 des Bodenmoduls 11 gezeigt, welche vorzugsweise stabile Metallwinkel sind.

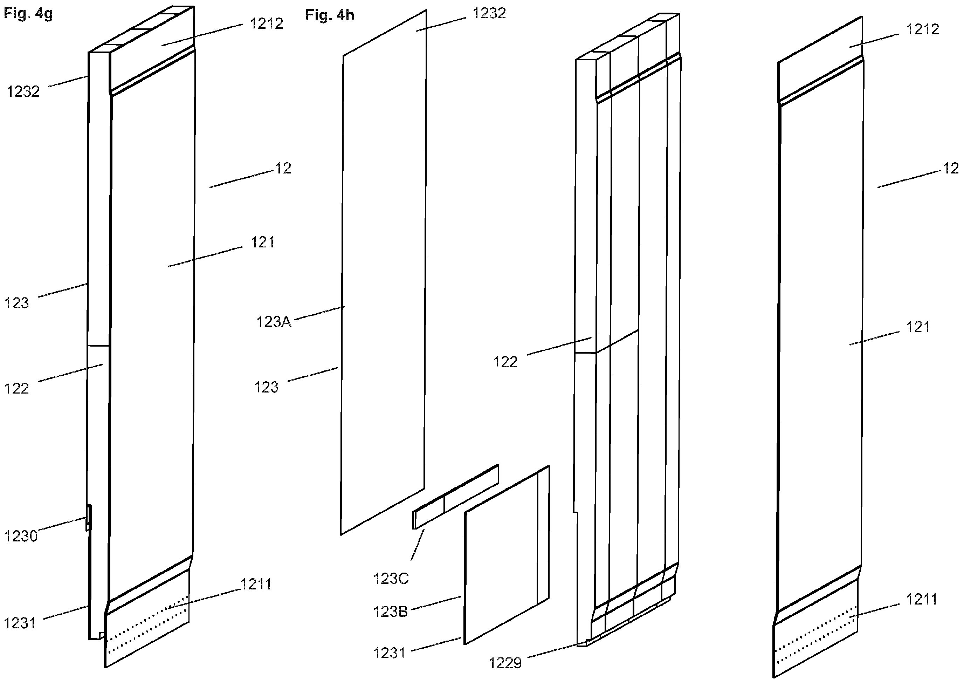

Fig. 4g zeigt eines der Wandmodule 12 von Fig. 4a mit Blick auf die Aussenplatte 121. Die Innenplatte 123 ist mit einem Aufnahmeschlitz 1230 versehen, welcher der Aufnahme des Anschlussfleisches 1131 der Innenplatte 113 des Bodenmoduls 11 dient. Die Endstücke des Bodenmoduls 11 und des Wandmoduls 12 sind daher ebenfalls derart ausgestaltet, dass sie einander eingesteckt werden können, um eine mechanische Verbindung zu realisieren, bevor die Aussenplatten 111, 121 und die Innenplatte 113, 123 miteinander verbunden werden.

Vorzugsweise können daher alle Kastenmodule 11, 12, 13, 14, 15 durch formschlüssige Verbindungen bzw. Steckverbindungen miteinander verbunden werden, um zumindest eine lose mechanische Verbindung zu realisieren, welche die anschliessenden Verbindungsarbeiten erleichtert.

Fig. 4h zeigt das Wandmodul 12 von Fig. 4g in Explosionsdarstellung. Die Aussenplatte 121 ist in einem Stück realisiert. Die Innenplatte 123 besteht aus drei Teilen 123A, 123B und 123C, welche es erlauben, den Aufnahmeschlitz 1230 zu realisieren. Es ist gezeigt, dass auch das Isolationsmaterial oder Isolationsmodul 122 entsprechende Einformungen aufweist. An der Unterseite ist eine Anschlussform 1229 vorgesehen, die zum Endstück des Bodenmoduls 11 korrespondiert.

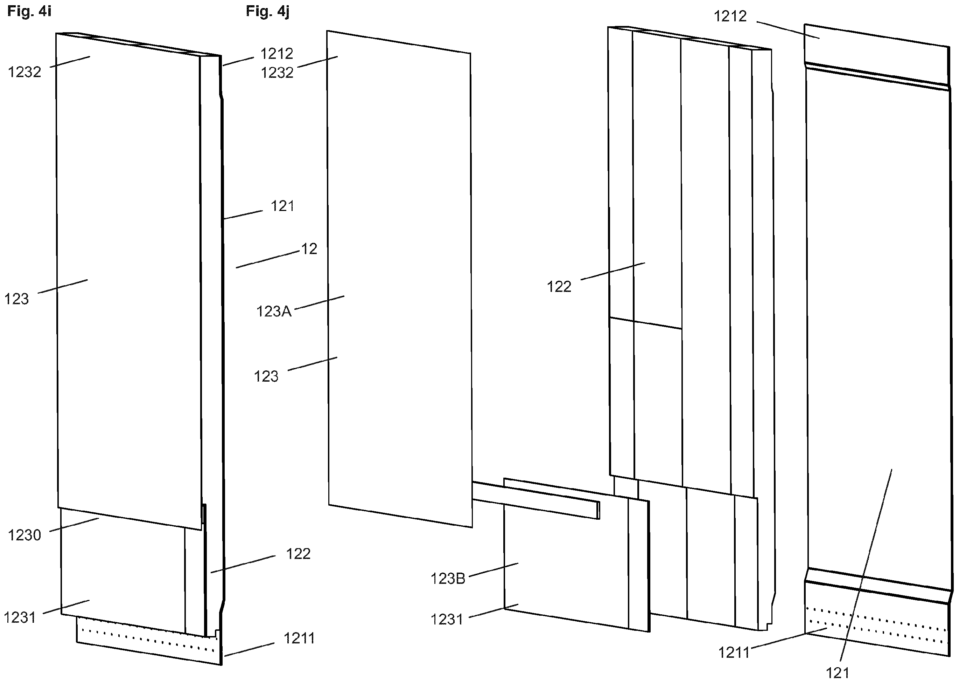

Fig. 4i zeigt das Wandmodul 12 von Fig. 4g mit Blick auf die Innenplatte 123.

Fig. 4j zeigt das Wandmodul 12 von Fig. 4f in Explosionsdarstellung.

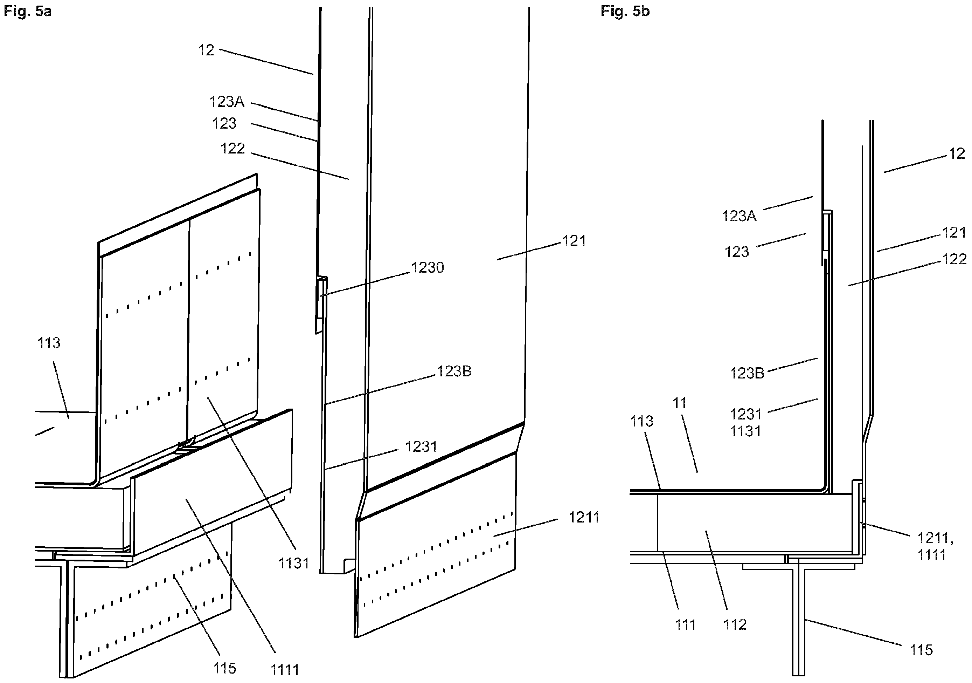

Fig. 5a zeigt einander zugewandte Teile des Bodenmoduls 11 und des Wandmoduls 12 in vergrösserter Darstellung mit den winkelförmigen Anschlussprofilen 115 an der Unterseite des Bodenmoduls 11.

Fig. 5b zeigt die miteinander verbundenen Teile des Bodenmoduls 11 und des Wandmoduls 12 von Fig. 5a.

Fig. 6 zeigt einen Teil des Wagenkastens 10 von Fig. 1 mit losgelöstem Frontmodul 15, welches eine Aussenplatte 151 und eine Innenplatte 153 sowie dazwischen gehaltenes Isolationsmaterial 152 aufweist. Das Frontmodul 15 wird durch Verbindung der Aussenplatte 151 und der Innenplatte 152 bzw. der Anschlussflanschen 1511, 1531 mit den weiteren Kastenmodulen 11, 12, 13, 14 bzw. den diesbezüglich vorgesehenen Anschlussflanschen 111F, 113F, 131F 141F verbunden, ohne sodass Wärmebrücken resultieren. Dazwischen wird entsprechend hervorstehendes Isolationsmaterial 102F aufgenommen.

Fig. 7a zeigt eine teilweise aufgeschnittene Schiebetür 16 zum Abschliessen einer der Zugangsöffnungen 90 des Wagenkastens 10 von Fig. 1. Die Schiebetür 16 ist von zwei unteren Laufwerken 94, die entlang einer unteren Führungsschiene 98 verschiebbar sind, und von zwei oberen Laufwerken 95, die entlang einer oberen Führungsschiene 99 verschiebbar sind, gehalten. Dazu umfasst die Schiebetür 16 zwei Kurbelwellen 52, die je über einen unteren und oberen Gelenkhebel 53 mit einem der unteren und oberen Laufwerke 94, 95 verbunden sind. Durch Betätigung eines Drehmechanismus 5 mittels eines Betätigungshebels 59 können Verschlussstangen 51 verschoben und die Kurbelwellen 52 gedreht werden. Durch Drehung der Kurbelwellen 52 werden auch die Gelenkhebel 53 (siehe Fig. 7) gedreht. Durch diesen Vorgang wird die Schiebetür 16 angehoben oder in den Türrahmen 96 abgesenkt.

Wie die weiteren Kastenmodule 11, 12, 13, 14, 15, weist auch die Schiebetür 16 eine Aussenplatte 161 und eine Innenplatte 163 (vorstehendes Teil schraffiert gezeigt) sowie dazwischen gehaltenes Isolationsmaterial 162 auf. Ferner ist die Schiebetür 16 von einem Isolationsrahmen 166 umschlossen. In der gezeigten Position ist die Schiebetür 16 dicht abschliessend in den Türrahmen 96 der Zugangsöffnung 90 eingesenkt.

Fig. 7b zeigt einen oberen Teil einer der Kurbelwellen 52 des Drehmechanismus 5 von Fig. 7a, die über einen oberen Gelenkhebel 53 mit dem oberen Laufwerk 95 verbunden ist. Durch Drehung der Kurbelwelle 52 wurde der Gelenkhebel 53 nach aussen gedreht und die Schiebetür 16 von der Wandöffnung 90 abgehoben.

### Bezugszeichenliste:

- 1: Transportfahrzeug, Schienenfahrzeug
- 10: Wagenkasten
- 101: Aussenhülle
- 102: Isolationshülle
- 102x, 102y: Isolationselemente
- 102F: frontseitiges Endstück der Isolationshülle
- 1020: Isolationsraum
- 103: Innenhülle
- 11: Kastenmodul, Bodenmodul
- 111: Aussenplatte des Bodenmoduls 11
- 111F: frontseitiger Anschlussflansch d. Aussenplatte 111
- 1111: Anschlussflanschen der Aussenplatte 111
- 112: Isolationsmaterial des Bodenmoduls 11
- 1120, 1121: Einformungen in der Isolationshülle 102
- 113: Innenplatte des Bodenmoduls 11
- 113F: frontseitiger Anschlussflansch d. Innenplatte 113
- 1131: Anschlussflanschen der Innenplatte 113
- 118: Anschlussprofile des Bodenmoduls 11
- 12: Kastenmodul, Wandmodul
- 121: Aussenplatte des Wandmoduls 12
- 1211, 1212: Anschlussflanschen der Aussenplatte 121
- 122: Isolationsmaterial des Wandmoduls 12
- 1229: Anschlussform
- 123: Innenplatte des Wandmoduls 12
- 1230: Aufnahmeschlitz
- 1231, 1232: Anschlussflanschen der Innenplatte 123
- 13: Kastenmodul, Verbindungsmodul
- 131: Aussenplatte des Verbindungsmoduls 13
- 131F: frontseitiger Anschlussflansch d. Aussenplatte 131
- 1311, 1312: Anschlussflanschen der Aussenplatte 131
- 132: Isolationsmaterial des Verbindungsmoduls 13
- 133: Innenplatte des Verbindungsmoduls 13
- 1331, 1332: Anschlussflanschen der Innenplatte 133
- 14: Kastenmodul, Deckenmodule
- 141: Aussenplatte des Deckenmoduls 14
- 141F: frontseitiger Anschlussflansch d. Aussenplatte 141
- 1411, 1412: Anschlussflanschen der Aussenplatte 141
- 142: Isolationsmaterial des Deckenmoduls 14
- 143: Innenplatte des Deckenmoduls 14
- 1431, 1432: Anschlussflanschen der Innenplatte 143
- 15: Kastenmodul, Frontmodul
- 151: Aussenplatte des Frontmoduls 15
- 152: Isolationsmaterial des Frontmoduls 15
- 153: Innenplatte des Frontmoduls 15
- 16: Schiebetür
- 161: Aussenplatte der Schiebetür 16
- 162: Isolationsmaterial der Schiebetür 16
- 163: Innenplatte der Schiebetür 16
- 19: Verbindungsplatten
- 191, 192: Installationen innerhalb des Wagenkastens 10
- 21: Verbindungslinie der Boden- und Wandmodule
- 22: Verbindungslinie der Wand- und Verbindungsmodule
- 23: Verbindungslinie der Winkel- und Deckenmodule
- 24: Verbindungslinie der Deckenmodulen
- 5: Verschlussvorrichtung, Drehmechanismus
- 51: Verschlussstangen
- 52: Kurbelwellen
- 53: Gelenkhebel
- 59: Betätigungshebel
- 6: Untergestell
- 61: Längsträger des Untergestells
- 90: Zugangsöffnung
- 91: Verschlussteile
- 94: untere Laufwerke
- 95: obere Laufwerke
- 96: Türrahmen
- 98: untere Führungsschiene
- 99: obere Führungsschiene

## Patentansprüche

1. Wagenkasten (10) für ein Transportfahrzeug (1) mit wenigstens einer abschliessbaren Zugangsöffnung (90) und mit Kastenmodulen (11, 12, 13, 14, 15), die einen Innenraum des Wagenkastens (10) begrenzen und die je eine Aussenplatte (111, 121, 131, 141, 151) und je eine Innenplatte (113, 123, 133, 143, 153) sowie dazwischen eingefügtes Isolationsmaterial (112, 122, 132, 142, 152) aufweisen, wobei die miteinander verbundenen Aussenplatten (111, 121, 131, 141, 151) eine in sich geschlossene Aussenhülle (101), dass die miteinander verbundenen Innenplatten (113, 123, 133, 143, 153) eine in sich geschlossene Innenhülle (103) und dass das dazwischen eingeschlossene Isolationsmaterial (112, 122, 132, 142, 152) eine in sich geschlossene Isolationshülle (102) bilden, und dass die Aussenplatten (111, 121, 131, 141, 151) und die Innenplatten (113, 123, 133, 143, 153) sowie das dazwischen eingeschlossene Isolationsmaterial (112, 122, 132, 142, 152) jedes Kastenmoduls (11, 12, 13, 14, 15) fest miteinander verbunden und derart dimensioniert sind, dass der Wagenkasten (10) eine selbsttragende Struktur aufweist, **dadurch gekennzeichnet, dass** die Kastenmodule (11, 12, 13, 14, 15) wenigstens ein Bodenmodul (11), wenigstens zwei Wandmodule (12), die gegebenenfalls über Verbindungsmodule (13) beidseits an das Bodenmodul (11) anschliessen, und wenigstens ein Deckenmodul (14) umfassen, welches gegebenenfalls über Verbindungsmodule (13) an die Wandmodule (12) anschliesst, wobei die Aussenplatte (141; 131; 121) eines höher liegenden Kastenmoduls (14; 13; 12) vorzugsweise jeweils die Aussenplatte (131; 121; 111) des darunter liegenden Kastenmoduls (13; 12; 11) nach aussen überdeckt.

2. Wagenkasten (10) nach Anspruch 1, **dadurch gekennzeichnet, dass** das wenigstens eine Bodenmodul (11), die beiden Wandmodule (12), die gegebenenfalls vorhandenen Verbindungsmodule (13) und das wenigstens eine Deckenmodul (14) an den Stirnseiten des Wagenkastens (10) je mit einem Frontmodul (15) verbunden sind, welches eine Aussenplatte (151) und eine Innenplatte (153) sowie dazwischen angeordnetes Isolationsmaterial (152) aufweist.

3. Wagenkasten (10) nach einem der Ansprüche 1 oder 2, **dadurch gekennzeichnet, dass** das wenigstens eine Bodenmodul (11), die beiden Wandmodule (12), die gegebenenfalls vorhandenen Verbindungsmodule (13) das wenigstens eine Deckenmodul (14) beidseits mit ihren Aussenplatten (111, 121, 131, 141) mit den Aussenplatten (151) der Frontmodule (15) und mit den Innenplatten (113, 123, 133, 143) mit dem Innenplatten (153) der Frontmodule (15) verbunden sind, wodurch die in sich geschlossene Aussenhülle (101), die in sich geschlossene Isolationshülle (102) und die in sich geschlossene Innenhülle (103) ergänzt werden.

4. Wagenkasten (10) nach einem der Ansprüche 1 - 3, **dadurch gekennzeichnet, dass** die wenigstens eine Zugangsöffnung (90) von einem Türrahmen (96) umschlossen und durch eine Schiebetür (16) abschliessbar ist, die entlang von Führungsschienen (98, 99) geführt und in den Türrahmen (96) dicht abschliessend einsenkbar ist und dass die Schiebetür (16) eine Aussenplatte (161) und eine Innenplatte (163), zwischen denen Isolationsmaterial (162) vorgesehen ist, umfasst.

5. Wagenkasten (10) nach einem der Ansprüche 1 - 4, **dadurch gekennzeichnet, dass** das Isolationsmaterial (112, 122, 132, 142, 152, 162) als Kunststoffschaum oder als feste Isolationselemente (102x, 102y) einstückig oder mehrstückig zwischen die Aussenplatten (111, 121, 131, 141, 151) und die Innenplatten (113, 123, 133, 143, 153) der Kastenmodule (11, 12, 13, 14, 15) und vorzugsweise auch zwischen die Aussenplatte (161) und die Innenplatte (163) der Schiebetür (16) eingefügt ist.

6. Wagenkasten (10) nach Anspruch 1, **dadurch gekennzeichnet, dass** die Isolationselemente (102x, 102y) mit den Aussenplatten (111, 121, 131, 141, 151, 161) und den Innenplatten (113, 123, 133, 143, 153, 163) der Kastenmodule (11, 12, 13, 14, 15) und/oder der Schiebetür (16) verklebt sind.

7. Wagenkasten (10) nach Anspruch 5 oder 6, **dadurch gekennzeichnet, dass** die Isolationselemente (102x, 102y) der Kastenmodule (11, 12, 13, 14, 15) derart zugeschnitten sind, dass beim Zusammenfügen der Kastenmodule (11, 12, 13, 14, 15) die Isolationshülle (102) praktisch spaltenfrei resultiert.

8. Wagenkasten (10) nach einem der Ansprüche 1 - 7, **dadurch gekennzeichnet, dass** die Aussenplatten (111, 121, 131, 141, 151) aus Metallblech, Aluminiumblech, vorzugsweise EN AW-5083 H321, Stahlblech, oder glasfaserverstärktem Kunststoff gefertigt sind und/oder dass die Innenplatten (113, 123, 133, 143, 153) aus Metallblech, Aluminiumblech, vorzugsweise EN AW-5083 H321, Stahlblech, oder glasfaserverstärktem Kunststoff gefertigt sind und/oder dass das Isolationsmaterial aus Polyurethan oder Polyurethan-Schaum gefertigt ist.

9. Wagenkasten (10) nach einem der Ansprüche 1 - 8, **dadurch gekennzeichnet, dass** die Materialdicke der Aussenhülle (101) oder der Aussenplatten (111, 121, 131, 141, 151) in einem Bereich von 2.5 mm - 6 mm, vorzugsweise bei 4 mm +/-10 % liegt, und/oder dass die Materialdicke der Innenhülle (103) oder der Innenplatten (113, 123, 133, 143, 153) in einem Bereich von 1.25 mm - 5 mm, vorzugsweise bei 2.5 mm +/- 10 % liegt und/oder dass die Materialdicke der Isolationshülle in einem Bereich von 50 mm - 250 mm liegt.

10. Transportfahrzeug (1), insbesondere Schienenfahrzeug, mit einem Untergestell (6), welches auf wenigstens einem Laufwerk, gegebenenfalls einem Drehgestell, gelagert ist, und das einen selbsttragenden Wagenkasten (10) nach einem der Ansprüche 1 - 9 trägt.

11. Verfahren zur Herstellung des Transportfahrzeugs (1) nach Anspruch 10, umfassend die folgenden Schritte:
a) Bereitstellung eines gegebenenfalls auf einem Laufwerk gelagerten Untergestells (6);
b) Bereitstellung wenigstens einer Schiebetür (16) und der Kastenmodule (11, 12, 13, 14, 15) für den vorzugsweise selbsttragenden Wagenkasten (10), umfassend wenigstens ein Bodenmodul (11), wenigstens zwei Wandmodule (12), gegebenenfalls Verbindungsmodule (13), wenigstens ein Deckenmodul (14) und zwei Frontmodule (15), die je eine Aussenplatte (111, 121, 131, 141, 151) und eine Innenplatte (113, 123, 133, 143, 153) aufweisen, die mit dazwischen angeordnetem Isolationsmaterial (112, 122, 132, 142, 152) verbunden, vorzugsweise verklebt werden;
c) Verbindung der Aussenplatten (111, 121, 131, 141, 151) der Kastenmodule (11, 12, 13, 14, 15) zur Bildung einer Aussenhülle (101) und Verbindung der Innenplatten (113, 123, 133, 143, 153) der Kastenmodule (11, 12, 13, 14, 15) zur Bildung einer Innenhülle (103), wobei zwischen der Aussenhülle (101) und der Innenhülle (103) die in sich geschlossene Isolationshülle (102) resultiert.

12. Verfahren nach Anspruch 11, **dadurch gekennzeichnet, dass** die Aussenplatten (111, 121, 131, 141, 151) beidseitig und gegebenenfalls frontseitig mit Anschlussflanschen (1111, 111F; 1211, 1212; 1311, 1312, 131F; 1411, 1412, 141F; 1511) versehen werden und dass die Innenplatten (113, 123, 133, 143, 153) beidseitig und gegebenenfalls frontseitig mit Anschlussflanschen (1131, 113F; 1231, 1232; 1331, 1332; 1431, 1432, 1531) versehen werden und dass die einander zugeordneten Anschlussflansche (1111, 111F, 113F; 1211, 1212; 1311, 1312, 131F; 1411, 1412, 141F; 1511) der Aussenplatten (111, 121, 131, 141, 151) und die einander zugeordneten Anschlussflansche (1131, 113F; 1231, 1232; 1331, 1332; 1431, 1432, 1531) der Innenplatten (113, 123, 133, 143, 153) je miteinander verbunden, gegebenenfalls verklebt, vernietet und verschweisst werden.

13. Verfahren nach Anspruch 11 oder 12, **dadurch gekennzeichnet, dass** vorgesehene Zugangsöffnungen (90) im Wagenkasten (10) mit einem Türrahmen (96) versehen werden und dass die mittels Laufwerken (94, 95) entlang von Führungsschienen (98, 99) verschiebbare Schiebetür (16) durch wenigstens einen Drehmechanismus (5, 52) mit den Laufwerken (94, 95) verbunden ist, mittels dessen die Schiebetür (16) in den Türrahmen (96) einsenkbar ist.

## Claims

1. A car body (10) for a transport vehicle (1) with at least one lockable access opening (90) and with body modules (11, 12, 13, 14, 15), which define an interior space of the car body (10) and which each have an outer panel (111, 121, 131, 141, 151) and an inner panel (113, 123, 133, 143, 153) as well as insulating material (112, 122, 132, 142, 152) inserted in between, wherein the interconnected outer panels (111, 121, 131, 141, 151) form an outer shell (101) that is closed on itself, wherein the interconnected inner panels (113, 123, 133, 143, 153) form an inner shell (103) that is closed on itself, and wherein the insulation material (112, 122, 132, 142, 152) enclosed in therebetween forms an insulation shell (102) that is closed on itself, and that the outer panels (111, 121, 131, 141, 151) and the inner panels (113, 123, 133, 143, 153) and the insulation material (112, 122, 132, 142, 152) enclosed in between of each body module (11, 12, 13, 14, 15) are firmly interconnected and dimensioned in such a way that the car body (10) comprises a self-supporting structure, **characterised in that** the body modules (11, 12, 13, 14, 15) comprise at least one base module (11), at least two wall modules (12), which optionally adjoin the base module (11) on both sides via connecting modules (13), and at least one top module (14), which optionally adjoins the wall modules (12) via connecting modules (13), wherein the outer panels (141; 131; 121) of a higher body module (14; 13; 12) preferably cover the outer panels (131; 121; 111) of the underlying body module (13; 12; 11) on the outside.

2. Car body (10) according to claim 1, **characterised in that** the at least one base module (11), the two wall modules (12), the optionally present connecting modules (13) and the at least one top module (14) are each connected at the end faces of the car body (10) to a front module (15) which comprises an outer panel (151) and an inner panel (153) and insulation material (152) arranged in between.

3. Car body (10) according to one of the claims 1 or 2, **characterised in that** the at least one base module (11), the two wall modules (12), the optionally present connecting modules (13), the at least one top module (14) are connected on both sides by their outer panels (111, 121, 131, 141) to the outer panels (151) of the front modules (15) and by their inner panels (113, 123, 133, 143) to the inner panels (153) of the front modules ( 15), thereby completing the closed outer shell (101), the closed insulation shell (102) and the closed inner shell (103).

4. Car body (10) according to one of the claims 1 - 3, **characterised in that** the at least one access opening (90) is enclosed by a door frame (96) and can be closed by a sliding door (16) which is guided along guide rails (98, 99) and can be lowered into the door frame (96) so as to seal it, and that the sliding door (16) comprises an outer panel (161) and an inner panel (163), between which insulation material (162) is provided.

5. Car body (10) according to one of the claims 1 - 4, **characterised in that** the insulation material (112, 122, 132, 142, 152, 162) is provided as plastic foam or as solid insulation elements (102x, 102y) in one or more pieces between the outer panels (111, 121, 131, 141, 151) and the inner panels (113, 123, 133, 143, 153) of the body modules (11, 12, 13, 14, 15) and preferably also between the outer panel (161) and the inner panel (163) of the sliding door (16).

6. Car body (10) according to claim 1, **characterised in that** the insulation elements (102x, 102y) are bonded to the outer panels (111, 121, 131, 141, 151, 161) and the inner panels (113, 123, 133, 143, 153, 163) of the body modules (11, 12, 13, 14, 15) and/or the sliding door (16 ) .

7. Car body (10) according to claim 5 or 6, **characterised in that** the insulation elements (102x, 102y) of the body modules (11, 12, 13, 14, 15) are cut to size in such a way that when the body modules (11, 12, 13, 14, 15) are joined together, the insulation shell (102) is virtually free of gaps.

8. Car body (10) according to one of the claims 1 - 7, **characterised in that** the outer panels (111, 121, 131, 141, 151) are made of sheet metal, aluminium sheet, preferably EN AW-5083 H321, steel sheet, or glass-fibre reinforced plastic and/or that the inner panels (113, 123, 133, 143, 153) are made of metal sheet, aluminium sheet, preferably EN AW-5083 H321, steel sheet, or glass-fibre reinforced plastic and/or that the insulation material is made of polyurethane or polyurethane foam.

9. Car body (10) according to one of the claims 1 - 8, **characterised in that** the material thickness of the outer shell (101) or the outer panels (111, 121, 131, 141, 151) is in the range of 2.5 mm - 6 mm, preferably at 4 mm +/-10%, and/or that the material thickness of the inner shell (103) or the inner panels (113, 123, 133, 143, 153) is in the range of 1.25 mm - 5 mm, preferably at 2.5 mm +/- 10%, and/or that the material thickness of the insulation shell is in the range of 50 mm - 250 mm.

10. A transport vehicle (1), in particular a rail vehicle, with an underframe (6) which is mounted on at least one carriage, optionally a bogie, and which carries a self-supporting car body (10) according to one of claims 1-9.

11. Method for manufacturing the transport vehicle (1) according to claim 10, comprising the following steps:
a) provision of a subframe (6) optionally mounted on a carriage;
b) providing at least one sliding door (16) and the body modules (11, 12, 13, 14, 15) for the preferably self-supporting car body (10), comprising at least one base module (11), at least two wall modules (12), optionally connecting modules (13), at least one top module (14) and two front modules (15), which each comprise an outer panel (111, 121, 131, 141, 151) and an inner panel (113, 123, 133, 143, 153), with insulation material (112, 122, 132, 142, 152) arranged in between, and which are connected, preferably adhesively bonded;
c) joining the outer panels (111, 121, 131, 141, 151) of the body modules (11, 12, 13, 14, 15) to form an outer shell (101) and joining the inner panels (113, 123, 133, 143, 153) of the body modules (11, 12, 13, 14, 15) to form an inner shell (103), whereby the closed insulation shell (102) is formed between the outer shell (101) and the inner shell (103).

12. Method according to claim 11, **characterised in that** the outer panels (111, 121, 131, 141, 151) are provided on both sides and optionally on the front with connection flanges (1111, 111F; 1211, 1212; 1311, 1312, 131F; 1411, 1412, 141F; 1511) and that the inner panels (113, 123, 133, 143, 153) are provided on both sides and, if necessary, on the front with connection flanges (1131, 113F; 1231, 1232; 1331, 1332; 1431, 1432, 1531) and that the associated connection flanges (1111, 111F, 113F; 1211, 1212; 1311, 1312, 131F; 1411, 1412, 141F; 1511) of the outer panels (111, 121, 131, 141, 151) and the associated connection flanges (1131, 113F; 1231, 1232; 1331, 1332; 1431, 1432, 1531) of the inner panels (113, 123, 133, 143, 153) are connected to each other, optionally glued, riveted and welded.

13. Method according to claim 11 or 12, **characterised in that** access openings (90) provided in the car body (10) are provided with a door frame (96) and that the sliding door (16), which is displaceable by means of carriages (94, 95) along guide rails (98, 99), is connected to the carriages (94, 95) by means of which the sliding door (16) can be lowered into the door frame (96).

## Revendications

1. Caisse (10) pour un véhicule de transport (1) avec au moins une ouverture d'accès (90) verrouillable et avec des modules de caisse (11, 12, 13, 14, 15) qui délimitent un espace intérieur de la caisse (10) et qui comportent chacun une plaque extérieure (111, 121, 131, 141, 151) et une plaque intérieure (113, 123, 133, 143, 153) ainsi qu'un matériau isolant (112, 122, 132, 142, 152), les plaques extérieures (111, 121, 131, 141, 151) reliées entre elles formant une enveloppe extérieure (101) fermée sur elle-même, que les plaques intérieures (113, 123, 133, 143, 153) reliées entre elles forment une enveloppe intérieure (103) fermée sur elle-même et que le matériau isolant (112, 122, 132, 142, 152) enfermé entre elles forme une enveloppe isolante (102) fermée sur elle-même, et que les plaques extérieures (111, 121, 131, 141, 151) et les plaques intérieures (113, 123, 133, 143, 153) ainsi que le matériau isolant (112, 122, 132, 142, 152) enfermé entre elles de chaque module de caisse (11, 12, 13, 14, 15) sont solidement reliés entre eux et dimensionnés de telle sorte que la caisse (10) présente une structure autoportante, **caractérisé en ce que** les modules de caisse (11, 12, 13, 14, 15) comprennent au moins un module de fond (11), au moins deux modules de paroi (12) qui se raccordent éventuellement des deux côtés au module de fond (11) par l'intermédiaire de modules de liaison (13), et au moins un module de plafond (14) qui se raccorde éventuellement aux modules de paroi (12) par l'intermédiaire de modules de liaison (13), la plaque extérieure (141; 131; 121) d'un module de caisse (14; 13; 12) situé plus haut recouvrant de préférence vers l'extérieur la plaque extérieure (131; 121; 111) du module de caisse (13; 12; 11) situé en dessous.

2. Caisse (10) selon la revendication 1, **caractérisé en ce que** le au moins un module de fond (11), les deux modules de paroi (12), les modules de liaison (13) éventuellement présents et le module de plafond (14) au nombre d'au moins un sont reliés chacun aux faces frontales de la caisse (10) par un module frontal (15) qui présente une plaque extérieure (151) et une plaque intérieure (153) ainsi qu'un matériau isolant (152) disposé entre les deux.

3. Caisse (10) selon une des revendications 1 ou 2, **caractérisé en ce que** le au moins un module de fond (11), les deux modules de paroi (12), les modules de liaison (13) éventuellement présents l'au moins un module de plafond (14) sont reliés des deux côtés par leurs plaques extérieures (111, 121, 131, 141) aux plaques extérieures (151) des modules frontaux (15) et par leurs plaques intérieures (113, 123, 133, 143) aux plaques intérieures (153 ) des modules frontaux (15), complétant ainsi l'enveloppe extérieure (101) fermée sur elle-même, l'enveloppe isolante (102) fermée sur elle-même et l'enveloppe intérieure (103) fermée sur elle-même.

4. Caisse (10) selon une des revendications 1 - 3, **caractérisé en ce que** l'au moins une ouverture d'accès (90) est entourée d'un cadre de porte (96) et peut être fermée par une porte coulissante (16), qui est guidée le long de rails de guidage (98, 99) et peut être abaissée de manière étanche dans le cadre de porte (96), et **en ce que** la porte coulissante (16) comprend une plaque extérieure (161) et une plaque intérieure (163) entre lesquelles est prévu un matériau isolant (162).

5. Caisse (10) selon une des revendications 1 - 4, **caractérisé en ce que** le matériau isolant (112, 122, 132, 142, 152, 162) est une mousse plastique ou des éléments isolants solides (102x, 102y) en une ou plusieurs pièces entre les panneaux extérieurs (111, 121, 131, 141, 151) et les panneaux intérieurs (113, 123, 133, 143, 153) des modules de caisse (11, 12, 13, 14, 15) et de préférence également entre le panneau extérieur (161) et la plaque intérieure (163) de la porte coulissante (16).

6. Caisse (10) selon la revendication 1, **caractérisé en ce que** les éléments d'isolation (102x, 102y) sont collés aux plaques extérieures (111, 121, 131, 141, 151, 161) et aux plaques intérieures (113, 123, 133, 143, 153, 163) des modules de caisse (11, 12, 13, 14, 15) et/ou de la porte coulissante (16).

7. Caisse (10) selon la revendication 5 ou 6, **caractérisé en ce que** les éléments d'isolation (102x, 102y) des modules de caisse (11, 12, 13, 14, 15) sont découpés de telle sorte que, lors de l'assemblage des modules de caisse (11, 12, 13, 14, 15), l'enveloppe isolante (102) soit pratiquement exempte de fentes.

8. Caisse (10) selon une des revendications 1 - 7, **caractérisé en ce que** les plaques extérieures (111, 121, 131, 141, 151) sont fabriquées en tôle métallique, en tôle d'aluminium, de préférence EN AW-5083 H321, en tôle d'acier ou en plastique renforcé de fibres de verre, et/ou **en ce que** les plaques intérieures (113, 123, 133, 143, 153) sont fabriquées en tôle métallique, en tôle d'aluminium, de préférence EN AW-5083 H321, en tôle d'acier ou en plastique renforcé de fibres de verre et/ou que le matériau isolant est en polyuréthane ou en mousse de polyuréthane.

9. Caisse (10) selon une des revendications 1 - 8, **caractérisé en ce que** l'épaisseur de la matière de l'enveloppe extérieure (101) ou des plaques extérieures (111, 121, 131, 141, 151) est comprise entre 2,5 mm et 6 mm, de préférence de 4 mm +/- 10 %, et/ou que l'épaisseur de la matière de l'enveloppe intérieure (103) ou des plaques intérieures (113, 123, 133, 143, 153) se situe dans une marge de 1,25 mm à 5 mm, de préférence à 2,5 mm +/- 10 % et/ou que l'épaisseur du matériau de la gaine d'isolation se situe dans une marge de 50 mm à 250 mm.

10. Véhicule de transport (1), en particulier véhicule ferroviaire, comprenant un châssis (6) qui est monté sur au moins un mécanisme de roulement, le cas échéant un bogie, et qui porte une caisse autoporteuse (10) selon l'une des revendications 1 à 9.

11. Procédé de fabrication du véhicule de transport (1) selon la revendication 10, comprenant les étapes suivantes:
a) mise à disposition d'un châssis (6) éventuellement monté sur un mécanisme de roulement ;
b) mise à disposition d'au moins une porte coulissante (16) et des modules de caisse (11, 12, 13, 14, 15) pour la caisse (10) de préférence autoportante, comprenant au moins un module de fond (11), au moins deux modules de paroi (12), éventuellement des modules de liaison (13), au moins un module de plafond (14) et deux modules de front (15), qui présentent chacun une plaque extérieure (111, 121, 131, 141, 151) et une plaque intérieure (113, 123, 133, 143, 153), qui sont reliées, de préférence collées, avec un matériau isolant (112, 122, 132, 142, 152) intercalé;
c) assemblage des plaques extérieures (111, 121, 131, 141, 151) des modules de caisse (11, 12, 13, 14, 15) pour former une enveloppe extérieure (101) et assemblage des plaques intérieures (113, 123, 133, 143, 153) des modules de caisse (11, 12, 13, 14, 15) pour former une enveloppe intérieure (103), ce qui permet d'obtenir une enveloppe isolante fermée (102) entre l'enveloppe extérieure (101) et l'enveloppe intérieure (103).

12. Procédé selon la revendication 11, **caractérisé en ce que** les plaques extérieures (111, 121, 131, 141, 151) sont munies de brides de raccordement (1111, 111F ; 1211, 1212 ; 1311, 1312, 131F ; 1411, 1412, 141F ; 1511) et que les plaques intérieures (113, 123, 133, 143, 153) sont munies de brides de raccordement (1131, 113F ; 1231, 1232 ; 1331, 1332 ; 1431, 1432, 1531) et que les brides de raccordement (1111, 111F, 113F ; 1211, 1212 ; 1311, 1312, 131F ; 1411, 1412, 141F ; 1511) associées des plaques extérieures (111, 121, 131, 141, 151) et des brides de raccordement (1131, 113F ; 1231, 1232 ; 1331, 1332 ; 1431, 1432, 1531) associées des plaques intérieures (113, 123, 133, 143, 153) sont reliées entre elles, le cas échéant collées, rivetées et soudées.

13. Procédé selon la revendication 11 ou 12, **caractérisé en ce que** des ouvertures d'accès (90) prévues dans la caisse (10) sont pourvues d'un cadre de porte (96) et **en ce que** la porte coulissante (16) pouvant être déplacée au moyen de chariots (94, 95) le long de rails de guidage (98, 99) est reliée aux chariots (94, 95), au moyen duquel la porte coulissante (16) peut être abaissée dans le cadre de porte (96).
